(19)

Europäisches
Patentamt
European
Patent Office
Office européen
des brevets

(11) **EP 3 231 834 A1**

(12) **EUROPEAN PATENT APPLICATION**
published in accordance with Art. 153(4) EPC

(43) Date of publication:
**18.10.2017 Bulletin 2017/42**

(21) Application number: **15866707.1**

(22) Date of filing: **09.12.2015**

(51) Int Cl.:
*C08J 3/20* (2006.01)     *C08K 3/00* (2006.01)
*C08K 3/36* (2006.01)     *C08K 5/09* (2006.01)
*C08K 5/31* (2006.01)     *C08K 5/36* (2006.01)
*C08K 5/405* (2006.01)    *C08K 5/54* (2006.01)
*C08K 5/548* (2006.01)    *C08L 9/06* (2006.01)

(86) International application number:
**PCT/JP2015/084550**

(87) International publication number:
**WO 2016/093282 (16.06.2016 Gazette 2016/24)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **10.12.2014 JP 2014250212**

(71) Applicant: **Bridgestone Corporation
Tokyo 104-8340 (JP)**

(72) Inventors:
• **SUZUKI, Shouko
  Tokyo 104-8340 (JP)**
• **NAKATANI, Kenji
  Tokyo 104-8340 (JP)**

(74) Representative: **Lang, Johannes
  Bardehle Pagenberg Partnerschaft mbB
  Patentanwälte, Rechtsanwälte
  Prinzregentenplatz 7
  81675 München (DE)**

(54) **METHOD FOR PRODUCING RUBBER COMPOSITION**

(57)    The present invention provides a method for producing a rubber composition containing a rubber component (A) which contains a copolymer of a conjugated diene compound and an aromatic vinyl compound, in which the conjugated diene compound amount in the copolymer is 50% by mass or more and 73% by mass or less and the molecular weight at the peak top of the molecular weight distribution of the polystyrene-equivalent number-average molecular weight of the copolymer as measured through gel permeation chromatography is 100,000 or more and 600,000 or less, a filler containing an inorganic filler (B), a silane coupling agent (C) and at least one accelerator (D) selected from guanidines, sulfenamides, thiazoles, thiurams, thioureas, dithiocarbamates and xanthates, wherein the rubber composition is kneaded in plural stages, and in the first stage (X) of kneading, the rubber component (A), all or a part of the inorganic filler (B), all or a part of the silane coupling agent (C) and the accelerator (D) are added and kneaded. The production method can produce a rubber composition excellent in low-heat-generation property and abrasion resistance.

EP 3 231 834 A1

**Description**

Technical Field

The present invention relates to a method for producing a rubber composition containing a rubber component, a filler, a silane coupling agent and an accelerator.

Background Art

Recently, in relation to the global movement to regulation of carbon dioxide emission with the increase in interest in environmental problems, a demand for low fuel consumption by automobiles is increasing. To meet such a demand, reduction in rolling resistance for tire performance is desired. Heretofore, as a method for reducing rolling resistance of tires, a method of optimizing tire structures has been investigated, but, at present, using a rubber composition having a lower heat-generation property as a rubber composition to be applied to tires is carried out as a most general method.

For a method of obtaining a rubber composition having such a low heat-generation property, a production method for obtaining a rubber composition having a good low heat-generation property has been proposed, in which the timing for mixing the components to constitute a rubber composition such as a rubber component, an inorganic filler such as silica or the like as a filler, a silane coupling agent for preventing aggregation of silica in the rubber composition and others and specific kneading conditions are defined in the kneading step to thereby enhance the activity of the coupling function of the silane coupling agent for producing the intended rubber composition (see PTL 1).

Citation List

Patent Literature

PTL 1: WO2012/043853

Summary of Invention

Technical Problem

However, in the production method described in PTL 1, the reaction efficiency between the inorganic filler such as silica or the like and the silane coupling agent may often lower depending on the amount of the unsaturated bond that the polymer (including copolymer here) contained in the rubber component or the molecular chain length or the like, and there still remained room to do more for further improvement.

Given the situation, an object of the present invention is to provide a method for producing a rubber composition where the timing of mixing the components constituting the rubber composition and specific kneading conditions in the kneading step are defined, thereby enabling production of a rubber composition having more excellent low-heat-generation property and abrasion resistance.

Solution to Problem

The present inventors have experimentally found that, when a copolymer of a conjugated diene compound and an aromatic vinyl compound, which has a specific conjugated diene compound amount and has a molecular weight distribution peak of a conjugated diene compound, is applied, the activity of the coupling function of a silane coupling agent can be increased, and have achieved the present invention.

Specifically, the present invention provides a method for producing a rubber composition containing a rubber component (A) which contains a copolymer of a conjugated diene compound and an aromatic vinyl compound, in which the conjugated diene compound amount in the copolymer is 50% by mass or more and 73% by mass or less and the molecular weight at the peak top of the molecular weight distribution of the polystyrene-equivalent mean molecular weight of the copolymer as measured through gel permeation chromatography is 100,000 or more and 600,000 or less, a filler containing an inorganic filler (B), a silane coupling agent (C) and at least one accelerator (D) selected from guanidines, sulfenamides, thiazoles, thiurams, thioureas, dithiocarbamates and xanthates, wherein the rubber composition is kneaded in plural stages, and in the first stage (X) of kneading, the rubber component (A), all or a part of the inorganic filler (B), all or a part of the silane coupling agent (C) and the accelerator (D) are added and kneaded.

Advantageous Effects of Invention

According to the present invention, there can be provided a method for producing a rubber composition excellent in low-heat-generation property and also excellent in abrasion resistance.

Description of Embodiments

[Method for Producing Rubber Composition]

The present invention is described in detail hereinunder.

The method for producing a rubber composition of an embodiment of the present invention is a method for producing a rubber composition containing a rubber component (A) which contains a copolymer of a conjugated diene compound and an aromatic vinyl compound (hereinafter this may be referred to as copolymer P), in which the conjugated diene compound amount in the copolymer P is 50% by mass or more and 73% by mass or less and the polystyrene-equivalent peak top molecular weight of the copolymer P as measured through gel permeation chromatography is 100,000 or more and 600,000 or less, a filler containing an inorganic filler (B), a silane coupling agent (C) and at least one accelerator (D) selected from guanidines, sulfenamides, thiazoles, thiurams, thioureas, dithiocarbamates and xanthates, wherein the rubber composition is kneaded in plural stages, and in the first stage (X) of kneading, the rubber component (A), all or a part of the inorganic filler (B), all or a part of the silane coupling agent (C) and the accelerator (D) are added and kneaded.

In the present invention, the accelerator (D) is added and kneaded in the first stage of kneading is for increasing the activity of the coupling function of the silane coupling agent (C).

In the first stage of kneading in the present invention, preferably, a rubber component (A), all or a part of an inorganic filler (B), and all or a part of a silane coupling agent (C) are kneaded and then an accelerator (D) is added thereto and further kneaded. In this manner, it is possible to further favorably prevent the reduction in the effect of improving the activity of the coupling function owing to mixing with the accelerator (D). In addition, after the reaction between the inorganic filler (B) and the silane coupling agent (C) has sufficiently proceeded, the reaction between the silane coupling agent (C) and the rubber component (A) can be made to proceed.

More preferably in the first stage of kneading, after the rubber component (A), all or a part of the inorganic filler and all or a part of the silane coupling agent (C) have been added, the time before adding the accelerator (D) during the first stage is 10 seconds or more and 180 seconds or less.

The lower limit of the time is more preferably 30 seconds or more, and the upper limit is more preferably 150 seconds or less, even more preferably 120 seconds or less. When the time is 10 seconds or more, the reaction between (B) and (C) can be made to sufficiently proceed. Even when the time is more than 180 seconds, it could hardly create any additional effect since the reaction between (B) and (C) has already sufficiently proceeded, and therefore the upper limit is preferably 180 seconds.

In this embodiment of the present invention, the maximum temperature of the rubber composition in the first stage of kneading is preferably 120°C or higher and 190°C or lower. This is for sufficiently promoting the reaction between the inorganic filler (B) and the silane coupling agent (C). From this viewpoint, the maximum temperature of the rubber composition in the first stage of kneading is more preferably 130°C or higher and 190°C or lower, even more preferably 140°C or higher and 180°C or lower.

In the production method for a rubber composition of the embodiment of the present invention, the kneading step includes at least two stages of the first stage of kneading not containing additives such as a vulcanizing agent and others except the accelerator (D) and the final stage of kneading containing additives such as a vulcanizing agent, etc. As needed, the kneading step may include an intermediate stage of kneading not containing additives such as a vulcanizing agent and others except the accelerator (D). Here, additives such as a vulcanizing agent and others refer to a vulcanizing agent and a vulcanization accelerator.

In this embodiment, the first stage of kneading refers to the first stage of kneading a rubber component (A), a filler containing an inorganic filler (B), a silane coupling agent (C) and an accelerator (D). This does not include a case of kneading a rubber component (A) and a filler except an inorganic filler (B) in the first stage, and a case of pre-kneading a rubber component (A) alone.

[Rubber Component (A)]

<Copolymer P>

The rubber component (A) that can be used in the production method for a rubber composition of the embodiment of the present invention contains the copolymer P of a conjugated diene compound and an aromatic vinyl compound.

The conjugated diene compound amount in the copolymer P is 50% by mass or more and 73% by mass or less. The molecular weight at the peak top of the molecular weight distribution of the polystyrene-equivalent number-average molecular weight of the copolymer P, as measured through gel permeation chromatography, is 100,000 or more and 600,000 or less.

When the conjugated diene compound amount in the copolymer P is less than 50% by mass, it is difficult to produce the copolymer itself and, in addition, a sufficient amount of unsaturated bonds to contribute to the reaction with a silane coupling agent could not be obtained and therefore the reaction efficiency with silica worsens. When the conjugated diene compound amount in the copolymer P is more than 73% by mass, the amount of unsaturated bonds to contribute to the reaction with a silane coupling agent is too much therefore causing gelation owing to reaction of radicals in the molecular chain, and therefore the physical properties of the rubber composition to be obtained are thereby worsened.

From this viewpoint, the conjugated diene compound amount in the copolymer P is preferably 50% by mass or more and 70% by mass or less, more preferably 50% by mass or more and 65% by mass or less.

When the molecular weight at the peak to (peak of the molecular weight distribution) is less than 100,000, a sufficient amount of unsaturated bonds to contribute to the reaction with silica could not be obtained and the reaction efficiency with silica worsens. In addition, when the peak is less than 100,000, the molecular chain is short and therefore sufficient kneading energy could not be applied in the kneading stage and desired silica dispersion could not be realized. On the other hand, when the peak in the molecular weight distribution is more than 600,000, the amount of unsaturated bonds to contribute to the reaction with a silane coupling agent is too much, therefore causing gelation through reaction of radicals in the molecular chain and physical properties would be thereby worsened.

From this viewpoint, the peak in the molecular weight distribution of the copolymer P is preferably 150,000 or more and 450,000 or less, more preferably 260,000 or more and 350,000 or less.

<Polymerization Method for Copolymer P>

As the polymerization method for obtaining the copolymer P, the following method is mentioned. Specifically, the copolymer P is preferably one obtained by anionic polymerization of a conjugated diene compound and an aromatic vinyl compound using an organic alkali metal compound or an organic alkaline earth metal as a polymerization initiator. The production method is not specifically limited, and any of a solution polymerization method, a vapor-phase polymerization method or a bulk polymerization method is usable. Among these polymerization methods, a solution polymerization method is preferred. The polymerization mode may be any of a batch one or a continuous one.

Among the organic alkali metal compound and the organic alkaline earth metal as a polymerization initiator, the organic alkali metal compound is preferred, and an organic lithium metal compound is especially preferred.

As the conjugated diene compound, for example, one or more compounds selected from isoprene, 1,3-butadiene, 1,3-pentadiene, 2,3-dimethyl-1,3-butadiene, 2-phenyl-1,3-butadiene and 1,3-hexadiene are favorably mentioned. One alone or two or more of these may be used either singly or as combined. Among these, isoprene, 1,3-butadiene and 2,3-dimethyl-1,3-butadiene are more preferred, and isoprene ad 1,3-butadiene are especially preferred.

As the aromatic vinyl compound that can be used in copolymerization with the conjugated diene compound, for example, one or more compounds selected from styrene, $\alpha$-methylstyrene, 1-vinylnaphthalene, 3-vinyltoluene, ethylvinylbenzene, divinylbenzene, 4-cyclohxylstyrene and 2,4,6-trimethylstyrene are favorably mentioned. One alone or two or more of these may be used either singly or as combined. Among these, styrene is especially preferred.

Use of 1,3-butadiene as the conjugated diene compound and use of styrene as the aromatic vinyl compound is especially favorable for the reasons that the monomers are excellent in practicability such as easy availability thereof and that the polymerization characteristic thereof is living anionic polymerization.

The rubber component (A) may contain a homopolymer of a conjugated diene compound such as polybutadiene, polyisoprene, etc., and a homopolymer of an aromatic vinyl compound such as polystyrene, etc., in addition to the conjugated diene compound and the aromatic vinyl compound.

The organic lithium compound as a polymerization initiator is not specifically limited, and hydrocarbyl lithiums, dilithium compounds and lithium amide compounds are preferably used. As the hydrocarbyl lithiums, those having a hydrocarbyl group with 2 to 20 carbon atoms are preferred, and there are mentioned ethyl lithium, n-propyl lithium, isopropyl lithium, n-butyl lithium, sec-butyl lithium, tert-octyl lithium, n-decyl lithium, phenyl lithium, 2-naphthyl lithium, 2-butyl-phenyl lithium, 4-phenyl-butyl lithium, cyclohexyl lithium, cyclopentyl lithium, a reaction product of diisopropenylbenzene and butyl lithium, etc. Among these, in particular, n-butyl lithium is favorable.

As the dilithium compounds, known ones are usable. For example, JP-B 1-53681 describes a method for producing a dilithium polymerization initiator by reacting a monolithium compound with a di-substituted vinyl or alkenyl group-containing aromatic hydrocarbon in the presence of a tertiary amine. As the monolithium compound, the above-mentioned ones are used. Among them, sec-butyl lithium is preferred.

Examples of the tertiary amine to be used in producing the dilithium compound as a polymerization initiator include lower aliphatic amines such as trimethylamine, triethylamine, etc., and N,N-diphenylmethylamine, etc., and triethylamine is especially preferred.

As the di-substituted vinyl or alkenyl group-containing aromatic hydrocarbon, for example, 1,3-(diisopropenyl)benzene, 1,4-(diisopropenyl)benzene, 1,3-bis(1-ethylethenyl)benzene, 1,4-bis(1-ethylethenyl)benzene and the like are preferably mentioned.

On the other hand, as the lithium amide compound, for example, there are mentioned lithium hexamethylene imide, lithium pyrrolidide, lithium piperidide, lithium heptamethyleneimide, lithium dodecamethyleneimide, lithium dimethylamide, lithium diethylamide, lithium dibutylamide, lithium dipropylamide, lithium diheptylamide, lithium dihexylamide, lithium dioctylamide, lithium di-2-ethylhexylamide, lithium didecylamide, lithium N-methylpiperazide, lithium ethylpropylamide, lithium ethylbutylamide, lithium ethylbenzylamide, lithium methylphenethylamide, etc. Among these, from the viewpoint of interaction effect with carbon black and polymerization initiation performance, cyclic lithium amides such as lithium hexamethyleneimide, lithium pyrrolidide, lithium piperidide, lithium heptamethyleneimide, lithium dodecamethyleneimide, etc. are preferred. Among these, in particular, lithium hexamethyleneimide and lithium pyrrolidide are preferred.

Regarding these lithium amide compounds, in general, those previously prepared from a secondary amine and an organic lithium compound can be used in polymerization, but the compounds may be prepared in a polymerization system (in-situ).

In the case where a solution polymerization method is used for obtaining the copolymer P, the monomer concentration in the solvent is preferably 5 to 50% by mass, more preferably 10 to 30% by mass. The content of the aromatic vinyl compound in the charged monomer mixture is preferably within a range of 0 to 55 by mass.

The amount of the polymerization initiator to be used for obtaining the copolymer P is preferably 0.20 mmol or more and 1.7 mmol per 100 g of the monomer, more preferably 0.36 mmol or more and 1.1 mmol.

As the method of producing a conjugated diene polymer by anionic polymerization using an organic lithium compound as a polymerization initiator, any conventional known method can be used.

Specifically, in an organic solvent inactive against reaction, for example, in a hydrocarbon solvent of aliphatic, alicyclic or aromatic hydrocarbon compounds, a conjugated diene compound and an aromatic vinyl compound are anionically polymerized using an organic lithium compound as a polymerization initiator optionally in the presence of a randomizer to give the intended, conjugated dienic copolymer.

As the hydrocarbon solvent, those having 3 to 8 carbon atoms are preferred, and for example, there are mentioned propane, n-butane, isobutene, n-pentane, isopentane, n-hexane, cyclohexane, propene, 1-butene, isobutene, trans-2-butene, cis-2-butene, 1-pentene, 2-pentene, 1-hexene, 2-hexene, benzene, toluene, xylene, ethylbenzene, etc. One alone or two or more of these may be used either singly or as combined.

The randomizer that may be used optionally is a compound having the following effect. For example, one is for control of the microstructure of a copolymer. Specifically, a randomizer contributes to controlling the increase in the 1,2-bond in the butadiene moiety in a butadiene polymer or a butadiene-styrene copolymer or the increase in the 3,4-bond in an isoprene polymer or the like. Another is for control of the compositional distribution of monomer units in a copolymer. Specifically, for example, a randomizer contributes to randomization of the butadiene unit and the styrene unit in a butadiene-styrene copolymer.

As the randomizer, any one may be appropriately selected from compounds heretofore generally used as a randomizer, and may be used. Specific examples thereof include ethers and tertiary amines such as dimethoxybenzene, tetrahydrofuran, dimethoxyethane, diethylene glycol dibutyl ether, diethylene glycol dimethyl ether, 2,2-di(2-tetrahydrofuryl)propane, triethylamine, pyridine, N-methylmorpholine, N,N,N',N'-tetramethylethylenediamine, 1,2-piperidinoethane, etc. Further, potassium salts such as potassium tert-amylate, potassium tert-butoxide, etc., and sodium salts such as sodium tert-amylate, etc. may also be employed. One alone or two or more of these may be used either singly or as combined.

A preferred amount of the randomizer to be used for obtaining the copolymer P is selected preferably within a range of 0.01 to 5 equivalents by mol relative to 1 mol of the organic lithium compound.

A preferred temperature in the polymerization reaction for obtaining the copolymer P is preferably 50 to 130°C, more preferably 70 to 120°C. The polymerization reaction can be carried out under the developed pressure, but in general, it is preferable to operate the reaction under a sufficient pressure for keeping the monomer substantially in a liquid phase. Specifically, the pressure is optionally a more increased pressure, though depending on the individual substances to be polymerized and on the polymerization medium to be used and the polymerization temperature, and such a pressure can be realized according to a suitable method of pressurizing a reactor with a gas that is inert relative to the polymerization reaction.

In this polymerization, all the starting materials participating in the polymerization such as polymerization initiator, solvent, monomer and others to be used are preferably those from which reaction inhibitors such as water, oxygen, carbon dioxide, protonic compounds and the like have been removed.

The glass transition temperature (Tg) of the resultant conjugated dienic polymer, as obtained through differential calorimetry, is preferably -95°C to -15°C. By controlling the glass transition temperature to fall within the range, viscosity increase can be prevented, and an easily handleable copolymer can be obtained.

In this embodiment, the copolymer P may be one obtained through coordination polymerization of a conjugated diene compound and an aromatic vinyl compound using a polymerization initiator that contains a lanthanum series rare earth metal compound.

In the case where the copolymer P is produced through coordination polymerization using a polymerization initiator that contains a lanthanum series rare earth metal compound, the following component (a), component (b) and component (c) are preferably used as combined.

The component (a) for use for the coordination polymerization is selected from rare earth metal compounds, and complex compounds of rare earth metal compounds and Lewis bases, etc. Here, the rare earth metal compounds include rare earth element carboxylates, alkoxides, $\beta$-diketone complexes phosphates, phosphites, etc.; the Lewis bases include acetylacetone, tetrahydrofuran, pyridine, N,N-dimethylformamide, thiophene, diphenyl ether, triethylamine, organic phosphorus compounds, mono- or di-alcohols, etc. The rare earth element of the rare earth metal compounds is preferably lanthanum, neodymium, praseodymium, samarium or gadolinium, and among these, neodymium is especially preferred. Specifically, the component (a) includes neodymium tri-2-ethyhexanoate and a complex compound thereof with acetylacetone, neodymium trineodecanoate and a complex compound thereof with acetylacetone, neodymium tri-n-butoxide, etc. One alone or two or more of these components (a) may be used either singly or as combined.

The component (b) for use for the coordination polymerization is selected from organic aluminum compounds. Specifically, the organic aluminum compounds include trihydrocarbyl aluminum compounds represented by a formula: $R^{12}_3Al$, hydrocarbyl aluminum hydrides represented by a formula: $R^{12}_2AlH$ or $R^{12}AlH_2$ (wherein $R^{12}$ each independently represent a hydrocarbon group having 1 to 30 carbon atoms), a hydrocarbyl aluminoxane compound having a hydrocarbon group with 1 to 30 carbon atoms, etc. Specifically, the organic aluminum compound include trialkyl aluminums, dialkyl aluminum hydrides, alkyl aluminum dihydrides, alkyl aluminoxanes, etc. One alone or two or more of these compounds may be used either singly or as combined. As the component (b), combined use of an aluminoxane and any other organic aluminum compound is preferred.

The component (c) for use for the coordination polymerization is selected from a hydrolysable halogen-having compound or a complex compound thereof with a Lewis base; an organic halide having a tertiary alkyl halide, a benzyl halide or an allyl halide; an ionic compound containing a non-coordinating anion and a pair cation, etc. Specifically, the component (c) of the type includes an alkyl aluminum dichloride, a dialkyl aluminum chloride, silicon tetrachloride, tin tetrachloride, a complex with a Lewis base such as zinc chloride and an alcohol, etc., a complex with a Lewis base such as magnesium chloride and an alcohol, etc., benzyl chloride, t-butyl chloride, benzyl bromide, t-butyl bromide, triphenylcarbonium tetrakis(pentafluorophenyl) borate, etc. One alone or two or more of these component (c) may be used either singly or as combined.

The polymerization initiator may be previously prepared using, as needed, the same conjugated diene compound as the monomer for polymerization and/or a non-conjugated diene compound, in addition to the components (a), (b) and (c). A part or all of the component (a) or the component (c) may be held on an inert solid. The amount of each component to be used may be suitably defined, and in general, the amount of the component (a) is 0.001 to 0.5 mmol per 100 g of the monomer. The ratio by mol of component (b)/component (a) is preferably 5 to 1000, and component (c)/component (b) is preferably 0.5 to 10.

The polymerization temperature in the coordination polymerization is preferably within a range of -80°C to 150°C, more preferably within a range of -20°C to 120°C. As the solvent for use in the coordination polymerization, the hydrocarbon solvent that is inert to reaction, as exemplified hereinabove for the above-mentioned anionic polymerization, can be used, and the concentration of the monomer in the reaction solution is also the same as that in the case of the anionic polymerization. Further, the reaction pressure in the coordination polymerization is also the same as in the anionic polymerization, and the starting materials for use for the reaction are preferably those from which reaction inhibitors such as water, oxygen, carbon dioxide, protonic compounds and the like have been removed.

The conjugated dienic polymer having a polymerization-active terminal, which is obtained through coordination polymerization using the polymerization initiator that contains a lanthanum series rare earth element compound, is preferably a homopolymer formed through polymerization of one kind of a conjugated dienic compound, or a copolymer formed through polymerization of two or more kinds thereof. The conjugated diene compound is preferably one or more compounds selected from isoprene, 1,3-butadiene, 1,3-pentadiene, 2,3-dimethyl-1,3-butadiene, 2-phenyl-1,3-butadiene and 1,3-hexadiene, and among these, isoprene, 1,3-butadiene and 2,3-dimethyl-1,3-butadiene are more preferred, and isoprene and 1,3-butadiene are especially preferred.

In the coordination polymerization, if needed, one or more conjugated diene compounds and an aromatic vinyl compound may be copolymerized. In this case, the aromatic vinyl compound is preferably one or more compounds selected from styrene, $\alpha$-methylstyrene, 1-vinylnaphthalene, 3-vinyltoluene, ethylvinylbenzene, divinylbenzene, 4-cyclohexylstyrene and 2,4,6-trimehtylstyrene, and styrene is especially preferred.

In this embodiment, in the case where the copolymer is produced through coordination polymerization, it is preferable that the vinyl bond content in the conjugated diene compound moiety in the copolymer is 1 mol% or less. This is because, in coordination polymerization, the cis-1,4-bond content is increased and the vinyl bond content is decreased to thereby increase the crystallinity in elongation of the polymer and to further improve the breaking resistance and the low-heat-generation property thereof. Here, the method of measuring the vinyl bond content of 2 mol% or less is based on Fourier transform IR spectrometry described in JP-A 2008-291096.

[Inorganic Filler (B)]

The inorganic filler (B) usable in the rubber composition production method of this embodiment of the present invention is preferably silica and an inorganic compound represented by the following general formula (XI):

$$dM^1 \cdot xSiO_y \cdot zH_2O \qquad (XI)$$

In the general formula (XI), $M^1$ is at least one selected from a metal selected from aluminum, magnesium, titanium, calcium and zirconium, and oxides or hydroxides of those metals, their hydrates and carbonates of the metals; d, x, y and z each indicate an integer of 1 to 5, an integer of 0 to 10, an integer of 2 to 5, and an integer of 0 to 10, respectively.

In the case where x and z are both 0 in the general formula (XI), the inorganic compound is at least one metal selected from aluminum, magnesium, titanium, calcium and zirconium, or a metal oxide or a metal hydroxide thereof.

In the embodiment of the present invention, silica is preferred among the above-mentioned inorganic filler (B) from the viewpoint of satisfying both low-rolling property and abrasion resistance. As silica, any and every commercial product is usable, and above all, use of wet-method silica, dry-method silica or colloidal silica is preferred, and use of wet-method silica is especially preferred. The BET specific surface area of silica (measured according to ISO5794/1) is preferably 40 to 350 $m^2/g$. Silica whose BET surface area falls within the range has an advantage of satisfying both rubber reinforcing performance and dispersibility in rubber component. From this viewpoint, silica whose BET surface area falls within a range of 80 to 350 $m^2/g$ is more preferred, and silica whose BET surface area falls within a range of 120 to 350 $m^2/g$ is especially preferred. As such silica, commercial products of a trade name "Nipsil AQ" (BET specific surface area = 205 $m^2/g$) and a trade name "Nipsil KQ" both manufactured by Tosoh Silica Corporation, and a trade name "Ultrasil VN3" (BET specific surface area = 175 $m^2/g$) manufactured by Degussa AG are usable.

The inorganic compound represented by the general formula (XI) includes alumina ($Al_2O_3$) such as γ-alumina, α-alumina, etc.; alumina monohydrate ($Al_2O_3 \cdot H_2O$) such as boehmite, diaspore, etc.; aluminum hydroxide [$Al(OH)_3$] such as gibbsite, bayerite, etc.; aluminum carbonate [$Al_2(CO_3)_2$], magnesium hydroxide [$Mg(OH)_2$], magnesium oxide (MgO), magnesium carbonate ($MgCO_3$), talc ($3MgO \cdot 4SiO_2 \cdot H_2O$), attapulgite ($5MgO \cdot 8SiO_2 \cdot 9H_2O$), titanium white ($TiO_2$), titanium black ($TiO_{2n-1}$), calcium oxide (CaO), calcium hydroxide [$Ca(OH)_2$], aluminum magnesium oxide ($MgO \cdot Al_2O_3$), clay ($Al_2O_3 \cdot 2SiO_2$), kaolin ($Al_2O_3 \cdot 2SiO_2 \cdot 2H_2O$), pyrophyllite ($Al_2O_3 \cdot 4SiO_2 \cdot H_2O$), bentonite ($Al_2O_3 \cdot 4SiO_2 \cdot 2H_2O$), aluminum silicate ($Al_2SiO_5$, $Al_4 \cdot 3SiO_4 \cdot 5H_2O$, etc.), magnesium silicate ($Mg_2SiO_4$, $MgSiO_3$, etc.), calcium silicate ($Ca_2 \cdot SiO_4$, etc.), aluminum calcium silicate ($Al_2O_3 \cdot CaO - 2SiO_2$, etc.), magnesium calcium silicate ($CaMgSiO_4$), calcium carbonate ($CaCO_3$), zirconium oxide ($ZrO_2$), zirconium hydroxide [$ZrO(OH)_2 \cdot nH_2O$], zirconium carbonate [$Zr(CO_3)_2$]; as well as crystalline aluminosilicate salts containing a charge-correcting hydrogen, alkali metal or alkaline earth metal such as various types of zeolite; and any of these is usable here. Those of the general formula (XI) where $M^1$ is at least one selected form an aluminum metal, an aluminum oxide or hydroxide, and their hydrates or aluminum carbonates are also preferred.

One alone or two or more kinds of these inorganic compounds represented by the general formula (XI) may be used either singly or as combined. The mean particle size of the inorganic compound is, from the viewpoint of the balance of kneading operability, abrasion resistance and wet grip performance, preferably within a range of 0.01 to 10 μm, more preferably within a range of 0.05 to 5 μm.

The inorganic filler (B) for use in the present invention may be silica alone, or may be a combination of silica and one or more kinds of inorganic compounds represented by the general formula (III).

The filler usable in the production method for a rubber composition of this embodiment may optionally contain carbon black in addition to the above-mentioned inorganic filler (B). Containing carbon black, the rubber composition can enjoy an effect of preventing it from being electrically charged by lowering electric resistance. The carbon black is not specifically limited. For example, high, middle or low-structure SAF, ISAF, IISAF, N339, HAF, FEF, GPF and SRF-grade carbon blacks, especially SAF, ISAF, IISAF, N339, HAF and FEF-grade carbon blacks are preferably used. Those having a nitrogen adsorption specific surface area ($N_2SA$, measured according to JIS K 6217-2:2001) of 30 to 250 $m^2/g$ are preferred. One alone or two or more kinds of these carbon blacks may be used either singly or as combined. In the present invention, carbon black is not contained in the inorganic filler (B).

The inorganic filler (B) in the rubber composition of this embodiment is used preferably in an amount of 20 to 120 parts by mass relative to 100 parts by mass of the rubber composition (A). The amount of 20 parts by mass or more is preferred from the viewpoint of securing wet performance, and the amount of 120 parts by mass or less is preferred from the viewpoint of improving low-heat-generation property. Further, the amount is more preferably 30 to 100 parts by mass.

Also, the filler in the rubber composition of the present invention is used preferably in an amount of 20 to 150 parts by mass relative to 100 parts by mass of the rubber component (A). The amount of 20 parts by mass or more is preferred from the viewpoint of improving reinforcing performance of the rubber composition, and the amount of 150 parts by mass or less is preferred from the viewpoint of improving low-heat-generation property.

In the filler, preferably, the inorganic filler (B) accounts for 40% by mass or more form the viewpoint of satisfying both wet performance and low-heat-generation property, and more preferably accounts for 70% by mass or more.

[Silane Coupling Agent (C)]

The silane coupling agent (C) to be used in the production method for a rubber composition of this embodiment of the present invention is preferably one or more kinds of compounds selected from the group consisting of compounds represented by the following general formula (I) and (II).

Using such a silane coupling agent (C), the rubber composition of the present invention can give pneumatic tires excellent in workability in rubber processing and having better abrasion resistance.

Hereinunder the following general formulae (I) and (II) are described in sequence.

$$(R^1O)_{3-p}(R^2)_p Si-R^3-S_a-R^3-Si(OR^1)_{3-r}(R^2)_r \cdots \qquad (I)$$

wherein $R^1$ may be the same or different, and each represents a linear, cyclic or branched alkyl group having 1 to 8 carbon atoms or a linear or branched alkoxyalkyl group having 2 to 8 carbon atoms, $R^2$ may be the same or different, and each represents a linear, cyclic or branched alkyl group having 1 to 8 carbon atoms, $R^3$ may be the same or different, and each represents a linear or branched alkylene group having 1 to 8 carbon atoms, a is 2 to 6 as a mean value, p and r may be the same or different and each is 0 to 3 as a mean value, with the proviso that both p and r are not 3.

Specific examples of the silane coupling agent (C) represented by the general formula (I) include bis(3-triethoxysilylpropyl) tetrasulfide, bis(3-trimethoxysilylpropyl) tetrasulfide, bis(3-methyldimethoxysilylpropyl) tetrasulfide, bis(2-triethoxysilylethyl) tetrasulfide, bis(3-triethoxysilylpropyl) disulfide, bis(3-trimethoxysilylpropyl) disulfide, bis(3-methyldimethoxysilylpropyl) disulfide, bis(2-triethoxysilylethyl) disulfide, bis(3-triethoxysilylpropyl) trisulfide, bis(3-trimethoxysilylpropyl) trisulfide, bis(3-methyldimethoxysilylpropyl) trisulfide, bis(2-triethoxysilylethyl) trisulfide, bis(3-monoethoxydimethylsilylpropyl) tetrasulfide, bis(3-monoethoxydimethylsilylpropyl) trisulfide, bis(3-monoethoxydimethylsilylpropyl) disulfide, bis(3-monomethoxydimethylsilylpropyl) tetrasulfide, bis(3-monomethoxydimethylsilylpropyl) trisulfide, bis(3-monomethoxydimethylsilylpropyl) disulfide, bis(2-monoethoxydimethylsilylethyl) tetrasulfide, bis(2-monoethoxydimethylsilylethyl) trisulfide, bis(2-monoethoxydimethylsilylethyl) disulfide, etc.

$$(R^4O)_{3-s}(R^5)_s Si-R^6-S_k-R^7-S_k-R^6-Si(OR^4)_{3-t}(R^5)_t \cdots \qquad (II)$$

wherein $R^4$ may be the same or different, and each represents a linear, cyclic or branched alkyl group having 1 to 8 carbon atoms or a linear or branched alkoxyalkyl group having 2 to 8 carbon atoms, $R^5$ may be the same or different, and each represents a linear, cyclic or branched alkyl group having 1 to 8 carbon atoms, $R^6$ may be the same or different, and each represents a linear or branched alkylene group having 1 to 8 carbon atoms, $R^7$ represents any divalent group of a general formula $(-S-R^8-S-)$, $(-R^9-S_{m1}-R^{10}-)$ or $(-R^{11}-S_{m2}-R^{12}-S_{m3}-R^{13}-)$ (where $R^8$ to $R^{13}$ may be the same or different and each represents a divalent aliphatic hydrocarbon group having 1 to 20 carbon atoms, a divalent alicyclic hydrocarbon group having 3 to 20 carbon atoms, a divalent aromatic group or a divalent organic group containing any other hetero element than sulfur and oxygen, m1, m2 and m3 may be the same or different and each is 1 or more and less than 4 as a mean value), k may be the same or different and each is 1 to 6 as a mean value, s and t may be the same or different and each is 0 to 3 as a mean value, with the proviso that both s and t are not 3.

Preferred examples of the silane coupling agent (C) represented by the above-mentioned general formula (II) includes compounds represented by a mean compositional formula:

$$(CH_3CH_2O)_3 Si-(CH_2)_3-S_2-(CH_2)_6-S_2-(CH_2)_3-Si(OCH_2CH_3)_3,$$

a mean compositional formula:

$$(CH_3CH_2O)_3 Si-(CH_2)_3-S_2-(CH_2)_{10}-S_2-(CH_2)_3-Si(OCH_2CH_3)_3,$$

a mean compositional formula:

$$(CH_3CH_2O)_3Si-(CH_2)_3-S_3-(CH_2)_6-S_3-(CH_2)_3-Si(OCH_2CH_3)_3,$$

a mean compositional formula:

$$(CH_3CH_2O)_3Si-(CH_2)_3-S_4-(CH_2)_6-S_4-(CH_2)_3-Si(OCH_2CH_3)_3,$$

a mean compositional formula:

$$(CH_3CH_2O)_3Si-(CH_2)_3-S-(CH_2)_6-S_2-(CH_2)_6-S-(CH_2)_3-Si(OCH_2CH_3)_3,$$

a mean compositional formula:

$$(CH_3CH_2O)_3Si-(CH_2)_3-S-(CH_2)_6-S_{2.5}-(CH_2)_6-S-(CH_2)_3-Si(OCH_2CH_3)_3,$$

a mean compositional formula:

$$(CH_3CH_2O)_3Si-(CH_2)_3-S-(CH_2)_6-S_3-(CH_2)_6-S-(CH_2)_3-Si(OCH_2CH_3)_3,$$

a mean compositional formula:

$$(CH_3CH_2O)_3Si-(CH_2)_3-S-(CH_2)_6-S_4-(CH_2)_6-S-(CH_2)_3-Si(OCH_2CH_3)_3,$$

a mean compositional formula:

$$(CH_3CH_2O)_3Si-(CH_2)_3-S-(CH_2)_{10}-S_2-(CH_2)_{10}-S-(CH_2)_3-Si(OCH_2CH_3)_3,$$

a mean compositional formula:

$$(CH_3CH_2O)_3Si-(CH_2)_3-S_4-(CH_2)_6-S_4-(CH_2)_6-S_4-(CH_2)_3-Si(OCH_2CH_3)_3,$$

a mean compositional formula:

$$(CH_3CH_2O)_3Si-(CH_2)_3-S_2-(CH_2)_6-S_2-(CH_2)_6-S_2-(CH_2)_3-Si(OCH_2CH_3)_3,$$

a mean compositional formula:

$$(CH_3CH_2O)_3Si-(CH_2)_3-S-(CH_2)_6-S_2-(CH_2)_6-S_2-(CH_2)_6-S-(CH_2)_3-Si(OCH_2CH_3)_3,$$

etc.

Among the compounds represented by the above-mentioned general formulae (I) and (II), the compounds represented by the general formula (I) are especially preferred as the silane coupling agent (C) for use in the production method for a rubber composition of this embodiment. This is because using a compound represented by the general formula (1) as the silane coupling agent (C) readily facilitates activation of the polysulfide bond site at which the accelerator (D) reacts with the rubber component (A).

In the present invention, one alone or two or more kinds of silane coupling agents (C) may be used either singly or as combined.

In this embodiment, the mixing amount of the silane coupling agent (C) in the rubber composition is preferably 1/100 or more and 20/100 or less in terms of the ratio by mass to the inorganic filler (silane coupling agent/inorganic filler). This is because, when the ratio is less than 1/100, the rubber composition could hardly exhibit the effect of improving the low-heat-generation property thereof, but when more than 20/100, the cost of the rubber composition increases to lower the economic potential thereof. More preferably, the ratio to the inorganic filler is 3/100 or more and 20/100 or less, even more preferably 4/100 or more and 10/100 or less.

[Accelerator (D)]

The accelerator (D) that can be used in the production method for a rubber composition of this embodiment includes guanidines, sulfenamides, thiazoles, thiurams, thioureas, dithiocarbamates and xanthates.

The guanidines include 1,3-diphenylguanidine, 1,3-di-o-tolylguanidine, 1-o-tolyl biguanide, dicatechol borate di-o-tolylguanidine salt, 1,3-di-o-cumenylguanidine, 1,3-di-o-biphenylguanidine, 1,3-di-o-cumenyl-2-propylguanidine, etc. 1,3-diphenylguanidine, 1,3-di-o-tolulguanidine and 1-o-tolyl biguanide are preferred as having high reactivity. 1,3-diphenylguanidine is especially preferred as having higher reactivity.

The sulfenamides that can be used in the production method for a rubber composition of this embodiment include N-cyclohexyl-2-benzothiazolylsulfenamide, N,N-dicyclohexyl-2-benzothiazolylsulfenamide, N-tert-butyl-2-benzothiazolylsulfenamide, N-oxydiethylene-2-benzothiazolylsulfenamide, N-methyl-2-benzothiazolylsulfenamide, N-ethyl-2-benzothiazolylsulfenamide, N-propyl-2-benzothiaozlylsulfenamide, N-butyl-2-benzothiazolylsulfenamide, N-pentyl-2-benzothiazolylsulfenamide, N-hexyl-2-benzothiazolylsulfenamide, N-pentyl-2-benzothiazolylsulfenamide, N-octyl-2-benzothiazolylsulfenamide, N-2-ethylhexyl-2-benzothiazolylsulfenamide, N-decyl-2-benzothiazolylsulfenamide, N-dodecyl-2-benzothiazolylsulfenamide, N-stearyl-2-benzothiazolylsulfenamide, N,N-dimethyl-2-benzothiazolylsulfenamide, N,N-diethyl-2-benzothiazolylsulfenamide, N,N-dipropyl-2-benzothiaozlylsulfenamide, N,N-dibutyl-2-benzothiazolylsulfenamide, N,N-dipentyl-2-benzothiaozlylsulfenamide, N,N-dihexyl-2-benzothiazolylsulfenamide, N,N-dipentyl-2-benzothiazolylsulfenamide, N,N-dioctyl-2-benzothiazolylsulfenamide, N,N-di-2-ethylhexylbenzothiazolylsulfenamide, N-decyl-2-benzothiazolylsulfenamide, N,N-didodecyl-2-benzothiaozlylsulfenamide, N,N-distearyl-2-benzothiazolylsulfenamide, etc. Among these, N-cyclohexyl-2-benzothiazolylsulfenamide and N-tert-butyl-2-benzothiazolylsulfenamide are preferred as having high reactivity.

The thiazoles that can be used in the production method for a rubber composition of this embodiment include 2-mercaptobenzothiaozle, di-2-benzothiazolyl disulfide, 2-mercaptobenzothiazole zinc salt, 2-mercaptobenzothiazol cyclohexylamine salt, 2-(N,N-diethylthiocarbamoylthio)benzothiazole, 2-(4'morpholinodithio)benzothiazole, 4-methyl-2-mercaptobenzothiazole, di-(4-methyl-2-benzothiazolyl) disulfide, 5-chloro-2-mercaptobenzothiazole, 2-mercaptobenzothiazole sodium, 2-mercapto-6-nitrobenzothiazole, 2-mercapto-naphtho[1,2-d]thiazole, 2-mercapto-5-methoxybenzothiazole, 6-amino-2-mercaptobenzothiazole, etc. Among these, 2-mercaptobenzothiazole and di-2-benzothiazolyl disulfide are preferred as having high reactivity.

The thiurams that can be used in the production method for a rubber composition of this embodiment include tetramethylthiuram disulfide, tetraethylthiuram disulfide, tetrapropylthiuram disulfide, tetraisopropylthiuram disulfide, tetrabutylthiuram disulfide, tetrapentylthiuram disulfide, tetrahexylhtiuram disulfide, tetraheptylthiuram disulfide, tetraoctylthiuram disulfide, tetranonylthiuram disulfide, tetradecylthiuram disulfide, tetradodecylthiuram disulfide, tetrastearylthiuram disulfide, tetrabenzylhtiuram disulfide, tetrakis(2-ethylhexyl)thiuram disulfide, tetramethylthiuram monosulfide, tetraethylthiuram monosulfide, tetrapropylthiuram monosulfide, tetraisopropylthiuram monosulfide, tetrabutylthiuram monosulfide, tetrapentylthiuram monosulfide, tetrahexylthiuram monosulfide, tetraheptylthiuram monosulfide, tetraoctylthiuram monosulfide, tetranonylthiuram monosulfide, tetradecylthiuram monosulfide, tetradodecylthiuram monosulfide, tetrastearylthiuram monosulfide, tetrabenzylhtiuram monosulfide, dipentamethylenethiuram tetrasulfide, etc. Among these, tetrakis(2-ethylhexyl)thiuram disulfide and tetrabenzylthiuram disulfide are preferred as having high reactivity.

The thioureas that can be used in the production method for a rubber composition of this embodiment include thiourea, N,N'-diphenylthiourea, trimethylthiourea, N,N'-diethylthiourea, N,N'-dimethylthiourea, N,N'-dibutylthiourea, ethylenethiourea, N,N'-diisopropylthiourea, N,N'-dicyclohexylthiourea, 1,3-di(o-tolyl)thiourea, 1,3-di(p-tolyl)thiourea, 1,1-diphenyl-2-thiourea, 2, 5-dithiobiurea, guanylthiourea, 1-(1-naphthyl)-2-thiourea, 1-phenyl-2-thiourea, p-tolylthiourea, o-tolylthiourea, etc. Among these, N,N'-diethylthiourea, trimethylthiourea, N,N'-diphenylthiorea and N,N'-dimethylthiourea are preferred as having high reactivity.

The dithiocarbamates that can be used in the production method for a rubber composition of this embodiment include zinc dimethyldithiocarbamate, zinc diethyldithiocarbamate, zinc dipropyldithiocarbamate, zinc diisopropyldithiocarbamate, zinc dibutyldithiocarbamate, zinc dipentyldithiocarbamate, zinc dihexyldithiocarbamate, zinc diheptyldithiocarbamate, zinc dioctyldithiocarbamate, zinc di(2-ethylhexyl)dithiocarbamate, zinc didecyldithiocarbamate, zinc didodecyldithiocarbamate, zinc N-pentamethylenedithiocarbamate, zinc N-ethyl-N-phenyldithiocarbamate, zinc dibenzyldithiocarbamate, copper dimethyldithiocarbamate, copper diethyldithiocarbamate, copper dipropyldithiocarbamate, copper diisopropyldithiocarbamate, copper dibutyldithiocarbamate, copper dipentyldithiocarbamate, copper dihexyldithiocarbamate, copper diheptyldithiocarbamate, copper dioctyldithiocarbamate, copper di(2-ethylhexyl)dithiocarbamate, copper didecyldithiocarbamate, copper didodecyldithiocarbamate, copper N-pentamethylenedithiocarbamate, copper dibenzyldithiocarbamate, sodium dimethyldithiocarbamate, sodium diethyldithiocarbamate, sodium dipropyldithiocarbamate, sodium diisopropyldithiocarbamate, sodium dibutyldithiocarbamate, sodium dipentyldithiocarbamate, sodium dihexyldithiocarbamate, sodium diheptyldithiocarbamate, sodium dioctyldithiocarbamate, sodium di(2-ethylhexyl)dithiocarbamate, sodium didecyldithiocarbamate, sodium didodecyldithiocarbamate, sodium N-pentamethylenedithiocarbamate, sodium dibenzyldithiocarbamate, ferric dimethyldithiocarbamate, ferric diethyldithiocarbamate, ferric dipropyldithiocarbamate, ferric diisopropyldithiocarbamate, ferric dibutyldithiocarbamate, ferric dipentyldithiocarbamate, ferric dihexyldithiocarbamate, ferric diheptyldithiocarbamate, ferric dioctyldithiocarbamate, ferric di(2-ethylhexyl)dithiocarbamate, ferric didecyldithiocarbamate, ferric didodecyldithiocarbamate, ferric N-pentamethylenedithiocarbamate, ferric dibenzyldithiocarbamate, etc. Among these, zinc dibenzyldithiocarbamate, zinc N-ethyl-N-phenyldithiocarbamate, zinc dimethyldithiocarbamate and cupper dimethyldithiocarbamate are preferred as having high reactivity.

The xanthates that can be used in the production method for a rubber composition of this embodiment include zinc methylxanthate, zinc ethylxanthate, zinc propylxanthate, zinc isopropylxanthate, zinc butylxanthate, zinc pentylxanthate, zinc hexylxanthate, zinc heptylxanthate, zinc octylxanthate, zinc 2-ethylhexylxanthate, zinc decylxanthate, zinc dodecylxanthate, potassium methylxanthate, potassium ethylxanthate, potassium propylxanthate, potassium isopropylxanthate, potassium butylxanthate, potassium pentylxanthate, potassium hexylxanthate, potassium heptylxanthate, potassium octylxanthate, potassium 2-ethylhexylxanthate, potassium decylxanthate, potassium dodecylxanthate, sodium methylxanthate, sodium ethylxanthate, sodium propylxanthate, sodium isopropylxanthate, sodium butylxanthate, sodium pentylxanthate, sodium hexylxanthate, sodium heptylxanthate, sodium ocytlxanthate, sodium 2-ethylhexylxanthate, sodium decylxanthate, sodium dodecylxanthate, etc. Among these, zinc isopropylxanthate is preferred as high reactivity.

In the production method for a rubber composition of this embodiment, the molar amount of the accelerator (D) in the rubber composition in the first stage of kneading is preferably 0.1 times or more and 1.0 time or less the molar amount of the silane coupling agent (C). When the amount is 0.1 times or more, the silane coupling agent (C) could be sufficiently activated, and when 1.0 time or less, the accelerator would not have any significant influence on the vulcanization speed. More preferably, the number of molecules (the molar number) of the accelerator (D) is 0.3 to 1.0 time the number of molecules (the molar number) of the silane coupling agent (C).

The accelerator (D) can be used also as an accelerator for sulfur vulcanization, and therefore an appropriate amount thereof can be optionally added also in the final stage of kneading.

[Organic Acid]

An organic acid that can be used in the first stage of kneading in the production method for a rubber composition of this embodiment includes saturated fatty acids and unsaturated fatty acids such as stearic acid, palmitic acid, myristic acid, lauric acid, arachidic acid, behenic acid, lignoceric acid, capric acid, pelargonic acid, caprylic acid, enanthic acid, caproic acid, oleic acid, vaccenic acid, linoleic acid, linolenic acid, nervonic acid, etc., as well as resin acids such as rosin acid, modified rosin acid, etc.

In the production method for a rubber composition of this embodiment, it is preferable that 50 mol% or more of the organic acid is stearic acid since the acid must sufficiently exhibit the function of a vulcanization accelerator. 50 mol% or more of the organic acid may be a rosin acid (including a modified rosin acid) and/or a fatty acid that may be contained in the case where the styrene-butadiene copolymer is produced through emulsion polymerization.

In this embodiment of the present invention, it is preferable that the molar amount X of the organic acid in the rubber composition in the first stage of kneading satisfies a relationship of the following formula [1] relative to the molar amount Y of the accelerator (D).

$$0 \le X \le 1.5 \times Y \qquad\qquad [1]$$

This is for favorably suppress the reduction in the coupling function activity improving effect by the addition of the accelerator (D) owing to the presence of a large amount of the organic acid. For reducing the amount of the organic acid in the first stage (X) of kneading, it is preferable that the organic acid is added in and after the second stage of kneading.

[Rubber Composition]

The rubber composition in this embodiment of the present invention is produced according to the above-mentioned production method. In general, various additives that can be generally incorporated in a rubber composition, such as a vulcanization activator of zinc oxide or the like, an antioxidant and others, can be incorporated in the rubber composition. It is preferable that these additives are optionally added and kneaded in the first stage or the final stage of kneading, or in an intermediate stage between the first stage and the final stage thereof.

For the production method for a rubber composition of this embodiment, a kneading apparatus such as a Banbury mixer, a roll, an intensive mixer or the like can be used.

As needed, one or more vulcanizing agents selected from sulfur, sulfur compounds, inorganic metal compounds, polyamines and organic peroxides may be incorporated in the rubber composition. Here, as sulfur, various kinds of powdery sulfurs such as petroleum-derived sulfur, volcano-derived sulfur, mineral-derived sulfur, precipitated sulfur, colloidal sulfur, insoluble sulfur and the like can be used. The sulfur compound includes morpholine disulfide, sulfur chloride, polymeric polysulfides, tetramethylthiuram disulfide, selenium dimethyldithiocarbamate, 2-(4'-morpholinodithio)benzothiazole, etc.

The inorganic metals except sulfur include selenium, tellurium, etc. The inorganic metal compounds include magnesium oxide, lead monoxide (litharge), zinc dioxide, etc. The polyamines include hexamethylenediamine, triethylenetetramine, tetraethylenepentamine, hexamethylenediamine carbonate, N,N-dicinnamylidene-1.6-hexanediamine, 4,4'-methylenebis(cyclohexylamine) carbamate, 4,4'-methylenebis(2-chloroaniline), etc. The organic peroxides include tert-butyl hydroperoxide, cumene hydroperoxide, di-tert-butyl peroxide, dicumyl peroxide, tert-butylcumyl peroxide, diisopropylbenzene hydroperoxide, 1,1,3,3-tetramethylbutyl hydroperoxide, benzoyl peroxide, etc.

In the rubber composition in this embodiment, it is preferable that a vulcanizing agent is incorporated in an amount of 0.3 to 15 parts by mass relative to 100 parts by mass of the rubber composition, more preferably in an amount of 0.5 to 10 parts by mass. One kind alone or two or more kinds of vulcanizing agents may be used either singly or as combined.

As needed, carbon black as a filler may be further incorporated in the rubber composition in this embodiment in an amount of 5 to 100 parts by mass relative to 100 parts by mass of the rubber component that contains the copolymer P. Adding carbon black in an amount of 5 to 100 parts by mass further improves the fracture resistance of the vulcanized rubber composition. Adding it in an amount of 100 parts by mass or less does not interfere with the formation of a polymer network of the copolymer P. From these viewpoints, it is preferable that carbon black is incorporated in an amount of 80 parts by mass or less, more preferably in an amount of 60 parts by mass or less, even more preferably in an amount of 50 parts by mass or less.

The nitrogen adsorption specific surface area ($N_2SA$) of the carbon black to be used as a filler in the present invention is preferably 20 to 200 m$^2$/g. This is because, when 20 m$^2$/g or more, the reinforcing performance for the rubber composition can be favorably secured, and when 200 m$^2$/g or less, the low-heat-generation property can be improved. Specifically, there are mentioned SRF, GPF, FEF, HAF, N326, N339, N347, N351, IISAF, ISAF, SAF, etc. One kind or two or more kinds of carbon blacks may be used either singly or as combined.

Various chemicals that are generally used in the field of rubber, for example, process oil, antiaging agent, scorch inhibitor, zinc oxide, stearic acid and the like may be optionally incorporated in the rubber composition in this embodiment within a range not detracting from the object of the present invention.

The rubber composition in this embodiment is applicable to various kinds of rubber products that may be produced by kneading with a kneading machine of an open kneader such as a roll or the like, or a closed kneader such as a Banbury mixer or the like, followed by vulcanization after working through molding. For example, the rubber composition can be used in applications for tire members such as tire tread, undertread, carcass, sidewall, side-reinforcing rubber, bead part (especially bead filler), etc., and also as other industrial products such as rubber pad, fender, belt, hose, etc. In particular, the rubber composition is favorably used as a rubber composition for treads for fuel-efficient tires, large-size tires and high-performance tires that are excellent in the balance of low-heat-generation property, abrasion resistance and fracture resistance.

Examples

The present invention is described more in detail with reference to Examples given hereinunder, but the present invention is not whatsoever restricted by the following Examples.

Various measurements were carried out on the basis of the following methods.

(1) Weight-Average Molecular Weight (Mw)

Based on a monodispersed polystyrene, a polystyrene-equivalent weight-average molecular weight (Mw) of each polymer was determined through gel permeation chromatography [GPC: HLC-8020 manufactured by Tosoh Corporation, column: GMH-XL manufactured by Tosoh Corporation (in-line 2 columns), detector: differential refractometer (RI)] .

(2) Number-Average Molecular Weight (Mn)

Based on a monodispersed polystyrene, a polystyrene-equivalent peak molecular weight (Mn) of each polymer was determined through gel permeation chromatography [GPC: HLC-8020 manufactured by Tosoh Corporation, column: GMH-XL manufactured by Tosoh Corporation (in-line 2 columns), detector: differential refractometer (RI)].

(3) Peak Molecular Weight (Mp)

Based on a monodispersed polystyrene, a polystyrene-equivalent peak molecular weight (Mp) of each polymer was determined through gel permeation chromatography [GPC: HLC-8020 manufactured by Tosoh Corporation, column: GMH-XL manufactured by Tosoh Corporation (in-line 2 columns), detector: differential refractometer (RI)).

(4) Microstructure and Bonding Styrene Amount

A conjugated diene compound amount (Bd (mass%), a vinyl bond amount (Vi (mass%)) and a bonding styrene amount (St (mass%)) of a copolymer were determined from the integral ratio on the $^1$H-NMR spectrum.

Heat-Generation Property (tan$\delta$ index) and abrasion resistance were evaluated according to the following methods.

<Heat-Generation Property (tan$\delta$ index)>

Using a dynamic shear viscoelastometer (manufactured by Rheometric Scientific Ltd.), tan$\delta$ was measured at a temperature of 60°C, a dynamic strain of 5% and a frequency of 15 Hz. The result was represented as an index with that of Comparative Example 1 set to 100. The lower the index, the lower the heat generation and the lower the hysteresis loss.

$$\text{Heat-Generation Index} = \{(\text{tan}\delta \text{ of tested vulcanized rubber composition})/(\text{tan}\delta \text{ of vulcanized rubber composition in Comparative Example 1})\} \times 100$$

<Abrasion Resistance (index)>

According to JIS K 6264-2:2005 and using a Lambourn abrasion tester, the wear amount was measured at a slip rate of 25% and at 23°C. The result was represented as an index with the reciprocal of the wear amount of Comparative Example 1 set to 100. The larger the index, the smaller the wear amount and the better the abrasion resistance.

$$\text{Abrasion Resistance Index} = \{(\text{wear amount of vulcanized rubber composition in Comparative Example 1})/(\text{wear amount of tested vulcanized rubber composition})\} \times 100$$

[Polymerization Method for Copolymer for Use in Production of Rubber Composition Sample]

<Production Example 1>

As shown below, a copolymer 1 to be used in the rubber composition in Example 1 was produced through solution polymerization. Based on the total mass of monomers, 50% by mass of styrene monomer and 50% by mass of butadiene monomer were put into a hexane solution (20 mass% concentration at 143 kg/hr, in a reactor having an inner volume of 76 L. Further, as a polymerization initiator, 3 mass% n-butyl lithium was put thereinto at 367 g/hr, and relative to n-butyl lithium, 0.42 equivalent of 1,2-butadene and 0.55 equivalent of 2,2-di(tetrahydrofuranyl)propane were continuously put into the reactor from the bottom thereof.

While the temperature at 2/3 of the reactor (the temperature measured on the side wall at a height of about 2/3 from the bottom) was kept at 104°C, the polymerization was carried out for a residence time of 20 minutes.

Isopropanol was added to the polymer segment obtained in the above-mentioned reaction to stop the polymerization reaction, then an antiaging agent 2,6-di-t-butyl-4-cresol (BHT) was added and kept in a blend tank for about 2 hours. Subsequently, the polymer segment was processed for solvent removal and dried to give a copolymer 1.

The bonding styrene amount of the resultant copolymer 1 was 50% by mass, and relative to the total amount of the copolymer, the butadiene component amount was 50% by mass and the vinyl bond content was 28% by mass.

<Production Example 2 to Production Example 20, Comparative Production Examples 1 to 7>

As shown in Table 1 to Table 3 and according to the same method as the polymerization method for the copolymer 1 but changing the mixing formulation, copolymers 2 to 20 and also copolymers 21 to 27 for use in Comparative Examples were produced through polymerization.

In Comparative Production Example 5, the copolymer produced corresponds to that in Examples, but the kneading method therein is not the method of the present invention as described below, and consequently, this was expressed as Comparative Production Example 5.

Table 1

| | | Production Example | | | | | | | | | |
|---|---|---|---|---|---|---|---|---|---|---|---|
| | | 1 | 2 | 3 | 4 | 5 | 6 | 7 | 8 | 9 | 10 |
| Copolymer | | 1 | 2 | 3 | 4 | 5 | 6 | 7 | 8 | 9 | 10 |
| Weight Ratio of Styrene Input | | 50 | 35 | 50 | 35 | 35 | 45 | 35 | 50 | 30 | 50 |
| Weight Ratio of 1,3-Butadiene Input | | 50 | 65 | 50 | 65 | 65 | 55 | 65 | 50 | 70 | 50 |
| N-butyl Lithium (mmol/hr) | | 172 | 172 | 234 | 234 | 198 | 198 | 198 | 129 | 129 | 454 |
| 2,2-Di(tetrahydrofuranyl)propane (mol ratio) | | 0.55 | 0.40 | 0.55 | 0.40 | 0.40 | 0.50 | 0.80 | 0.55 | 0.37 | 0.55 |
| Property of Copolymer | Bd (mass%) | 50 | 65 | 50 | 65 | 65 | 55 | 65 | 50 | 70 | 50 |
| | Vi (mass%) | 28 | 28 | 28 | 28 | 28 | 28 | 55 | 28 | 28 | 28 |
| | St (mass%) | 50 | 35 | 50 | 35 | 35 | 45 | 35 | 50 | 30 | 50 |
| | Mp ($\times$1,000) | 350 | 350 | 260 | 260 | 300 | 300 | 300 | 450 | 450 | 150 |
| | Molecular Weight Distribution | 2.0 | 2.0 | 2.0 | 2.0 | 2.0 | 2.0 | 2.1 | 2.0 | 2.0 | 2.0 |

Table 2

| | | Production Example | | | | | | | | | |
|---|---|---|---|---|---|---|---|---|---|---|---|
| | | 11 | 12 | 13 | 14 | 15 | 16 | 17 | 18 | 19 | 20 |
| Copolymer | | 11 | 12 | 13 | 14 | 15 | 16 | 17 | 18 | 19 | 20 |
| Weight Ratio of Styrene Input | | 30 | 35 | 35 | 35 | 50 | 27 | 50 | 27 | 35 | 50 |
| Weight Ratio of 1,3-Butadiene Input | | 70 | 65 | 65 | 65 | 50 | 73 | 50 | 73 | 65 | 50 |
| N-butyl Lithium (mmol/hr) | | 448 | 150 | 400 | 198 | 103 | 103 | 603 | 595 | 103 | 172 |
| 2,2-Di(tetrahydrofuranyl)propane (mol ratio) | | 0.37 | 0.40 | 0.40 | 0.40 | 0.55 | 0.34 | 0.55 | 0.34 | 0.40 | 0.55 |
| Property of Copolymer | Bd (mass%) | 70 | 65 | 65 | 65 | 50 | 73 | 50 | 73 | 65 | 50 |
| | Vi (mass%) | 28 | 28 | 28 | 28 | 28 | 28 | 28 | 28 | 28 | 28 |
| | St (mass%) | 30 | 35 | 35 | 35 | 50 | 27 | 50 | 27 | 35 | 50 |
| | Mp ($\times$1,000) | 150 | 400 | 180 | 300 | 600 | 600 | 100 | 100 | 600 | 350 |
| | Molecular Weight Distribution | 2.0 | 2.0 | 2.3 | 1.1 | 2.0 | 2.0 | 2.0 | 2.0 | 2.0 | 2.0 |

Table 3

| | | Comparative Production Example | | | | | | |
|---|---|---|---|---|---|---|---|---|
| | | 1 | 2 | 3 | 4 | 5 | 6 | 7 |
| Copolymer | | 21 | 22 | 23 | 24 | 25 | 26 | 27 |
| Weight Ratio of Styrene Input | | 26 | 24 | 45 | 45 | 45 | 26 | 24 |
| Weight Ratio of 1,3-Butadiene Input | | 74 | 76 | 55 | 55 | 55 | 74 | 76 |
| N-butyl Lithium (mmol/hr) | | 252 | 315 | 95 | 690 | 201 | 252 | 315 |
| 2,2-Di(tetrahydrofuranyl)propane (mol ratio) | | 0.20 | 0.25 | 0.42 | 0.42 | 0.27 | 0.20 | 0.25 |
| Property of Copolymer | Bd (mass%) | 74 | 76 | 55 | 55 | 55 | 74 | 76 |
| | Vi (mass%) | 10 | 19 | 28 | 28 | 10 | 10 | 19 |
| | St (mass%) | 26 | 24 | 45 | 45 | 45 | 26 | 24 |
| | Mp ($\times$1,000) | 246 | 201 | 610 | 90 | 300 | 246 | 201 |
| | Molecular Weight Distribution | 2.3 | 3.6 | 2.3 | 2.0 | 2.0 | 2.3 | 3.6 |

[Examples 1 to 20, Comparative Examples 1 to 7]

Plural rubber composition samples were produced, changing the mixing formulation and the kneading method.

Styrene-butadiene copolymers differing in the conjugated diene compound amount (Bd (mass%)), the vinyl bond amount (Vi (mass%)), the bonding styrene amount (St (mass%)), the peak molecular weight (Mp) and the molecular weight distribution (MWD) were prepared. Using each copolymer and further changing the kneading method, rubber composition samples of Examples 1 to 20 and Comparative Examples 1 to 7 were produced.

In every case except in Comparative Examples 5 to 7, the components were kneaded in a Banbury mixer in such a controlled manner that the accelerator (D) thiourea was added in the first stage of kneading (kneading time: 3 min) and the maximum temperature of the rubber composition in the first stage (D) of kneading could be 150°C.

In Comparative Examples 5 to 7, the accelerator (D) thiourea was added in the final stage of kneading.

The heat-generation property (tan$\delta$ index) and the abrasion resistance of the resultant rubber compositions were evaluated according to the above-mentioned methods. The results are shown in Table 4 to Table 8.

Table 4

| | | | | Example | | | | | | |
|---|---|---|---|---|---|---|---|---|---|---|
| | | | | 1 | 2 | 3 | 4 | 5 | 6 | 7 |
| Formulation (part by mass) | First State of Kneading | Copolymer*1 | kind | 1 | 2 | 3 | 4 | 5 | 6 | 7 |
| | | | amount | 100 | 100 | 100 | 100 | 100 | 100 | 100 |
| | | Carbon Black N220 *2 | | 10.0 | 10.0 | 10.0 | 10.0 | 10.0 | 10.0 | 10.0 |
| | | Silica *3 | | 50.0 | 50.0 | 50.0 | 50.0 | 50.0 | 50.0 | 50.0 |
| | | Silane Coupling Agent *4 | | 5.0 | 5.0 | 5.0 | 5.0 | 5.0 | 5.0 | 5.0 |
| | | Aromatic Oil | | 30.0 | 30.0 | 30.0 | 30.0 | 30.0 | 30.0 | 30.0 |
| | | Thiourea *5 | | 1.2 | 1.2 | 1.2 | 1.2 | 1.2 | 1.2 | 1.2 |
| | | Stearic Acid | | 2.0 | 2.0 | 2.0 | 2.0 | 2.0 | 2.0 | 2.0 |
| | | Antiaging Agent 6PPD *6 | | 1.0 | 1.0 | 1.0 | 1.0 | 1.0 | 1.0 | 1.0 |
| | Final Stage of Kneading | Antiaging Agent TMDQ *7 | | 1.0 | 1.0 | 1.0 | 1.0 | 1.0 | 1.0 | 1.0 |
| | | Zinc Oxide | | 2.5 | 2.5 | 2.5 | 2.5 | 2.5 | 2.5 | 2.5 |
| | | Vulcanization Accelerator DPG *8 | | 0.6 | 0.6 | 0.6 | 0.6 | 0.6 | 0.6 | 0.6 |
| | | Vulcanization Accelerator MBTS *9 | | 1.0 | 1.0 | 1.0 | 1.0 | 1.0 | 1.0 | 1.0 |
| | | Vulcanization Accelerator TBBD *10 | | 0.6 | 0.6 | 0.6 | 0.6 | 0.6 | 0.6 | 0.6 |
| | | Sulfur | | 1.5 | 1.5 | 1.5 | 1.5 | 1.5 | 1.5 | 1.5 |
| Evaluation | | | tanδ | 78 | 84 | 85 | 89 | 85 | 83 | 85 |
| | | | Abrasion Resistance | 120 | 117 | 115 | 113 | 116 | 118 | 110 |

Table 5

| | | | | Example | | | | | | |
|---|---|---|---|---|---|---|---|---|---|---|
| | | | | 8 | 9 | 10 | 11 | 12 | 13 | 14 |
| Formulation (part by mass) | First State of Kneading | Copolymer*1 | kind | 8 | 9 | 10 | 11 | 12 | 13 | 14 |
| | | | amount | 100 | 100 | 100 | 100 | 100 | 100 | 100 |
| | | Carbon Black N220 *2 | | 10.0 | 10.0 | 10.0 | 10.0 | 10.0 | 10.0 | 10.0 |
| | | Silica *3 | | 50.0 | 50.0 | 50.0 | 50.0 | 50.0 | 50.0 | 50.0 |
| | | Silane Coupling Agent *4 | | 5.0 | 5.0 | 5.0 | 5.0 | 5.0 | 5.0 | 5.0 |
| | | Aromatic Oil | | 30.0 | 30.0 | 30.0 | 30.0 | 30.0 | 30.0 | 30.0 |
| | | Thiourea *5 | | 1.2 | 1.2 | 1.2 | 1.2 | 1.2 | 1.2 | 1.2 |
| | | Stearic Acid | | 2.0 | 2.0 | 2.0 | 2.0 | 2.0 | 2.0 | 2.0 |
| | | Antiaging Agent 6PPD *6 | | 1.0 | 1.0 | 1.0 | 1.0 | 1.0 | 1.0 | 1.0 |
| | Final Stage of Kneading | Antiaging Agent TMDQ *7 | | 1.0 | 1.0 | 1.0 | 1.0 | 1.0 | 1.0 | 1.0 |
| | | Zinc Oxide | | 2.5 | 2.5 | 2.5 | 2.5 | 2.5 | 2.5 | 2.5 |
| | | Vulcanization Accelerator DPG *8 | | 0.6 | 0.6 | 0.6 | 0.6 | 0.6 | 0.6 | 0.6 |
| | | Vulcanization Accelerator MBTS *9 | | 1.0 | 1.0 | 1.0 | 1.0 | 1.0 | 1.0 | 1.0 |
| | | Vulcanization Accelerator TBBD *10 | | 0.6 | 0.6 | 0.6 | 0.6 | 0.6 | 0.6 | 0.6 |
| | | Sulfur | | 1.5 | 1.5 | 1.5 | 1.5 | 1.5 | 1.5 | 1.5 |
| Evaluation | | | tanδ | 90 | 94 | 95 | 99 | 92 | 98 | 80 |
| | | | Abrasion Resistance | 110 | 108 | 106 | 103 | 114 | 105 | 118 |

Table 6

| | | | | | Example | | | | | |
|---|---|---|---|---|---|---|---|---|---|---|
| | | | | | 15 | 16 | 17 | 18 | 19 | 20 |
| Formulation (part by mass) | First State of Kneading | Copolymer*1 | | kind | 15 | 16 | 17 | 18 | 19 | 20 |
| | | | | amount | 100 | 100 | 100 | 100 | 100 | 100 |
| | | Carbon Black N220 *2 | | | 10.0 | 10.0 | 10.0 | 10.0 | 10.0 | 10.0 |
| | | Silica *3 | | | 50.0 | 50.0 | 50.0 | 50.0 | 50.0 | 50.0 |
| | | Silane Coupling Agent *4 | | | 5.0 | 5.0 | 5.0 | 5.0 | 5.0 | 5.0 |
| | | Aromatic Oil | | | 30.0 | 30.0 | 30.0 | 30.0 | 30.0 | 30.0 |
| | | Thiourea *5 | | | 1.2 | 1.2 | 1.2 | 1.2 | 1.2 | 0.0 |
| | | Vulcanization Accelerator DPG *8 | | | 0.0 | 0.0 | 0.0 | 0.0 | 0.0 | 1.0 |
| | | Stearic Acid | | | 2.0 | 2.0 | 2.0 | 2.0 | 2.0 | 0.0 |
| | | Antiaging Agent 6PPD *6 | | | 1.0 | 1.0 | 1.0 | 1.0 | 1.0 | 1.0 |
| | Final Stage of Kneading | Antiaging Agent TMDQ *7 | | | 1.0 | 1.0 | 1.0 | 1.0 | 1.0 | 1.0 |
| | | Zinc Oxide | | | 2.5 | 2.5 | 2.5 | 2.5 | 2.5 | 2.5 |
| | | Vulcanization Accelerator DPG *8 | | | 0.6 | 0.6 | 0.6 | 0.6 | 0.6 | 0.6 |
| | | Vulcanization Accelerator MBTS *9 | | | 1.0 | 1.0 | 1.0 | 1.0 | 1.0 | 1.0 |
| | | Vulcanization Accelerator TBBD *10 | | | 0.6 | 0.6 | 0.6 | 0.6 | 0.6 | 0.6 |
| | | Stearic Acid | | | 0.0 | 0.0 | 0.0 | 0.0 | 0.0 | 2.0 |
| | | Sulfur | | | 1.5 | 1.5 | 1.5 | 1.5 | 1.5 | 1.5 |
| Evaluation | | | | tanδ | 95 | 97 | 98 | 99 | 96 | 86 |
| | | | | Abrasion Resistance | 107 | 104 | 102 | 101 | 104 | 113 |

Table 7

| | | | | Comparative Example | | | |
|---|---|---|---|---|---|---|---|
| | | | | 1 | 2 | 3 | 4 |
| Formulation (part by mass) | First State of Kneading | Copolymer*1 | kind | 21 | 22 | 23 | 24 |
| | | | amount | 100 | 100 | 100 | 100 |
| | | Carbon Black N220 *2 | | 10.0 | 10.0 | 10.0 | 10.0 |
| | | Silica *3 | | 50.0 | 50.0 | 50.0 | 50.0 |
| | | Silane Coupling Agent *4 | | 5.0 | 5.0 | 5.0 | 5.0 |
| | | Aromatic Oil | | 30.0 | 30.0 | 30.0 | 30.0 |
| | | Thiourea *5 | | 1.2 | 1.2 | 1.2 | 1.2 |
| | | Stearic Acid | | 2.0 | 2.0 | 2.0 | 2.0 |
| | | Antiaging Agent 6PPD *6 | | 1.0 | 1.0 | 1.0 | 1.0 |
| | Final Stage of Kneading | Antiaging Agent TMDQ *7 | | 1.0 | 1.0 | 1.0 | 1.0 |
| | | Zinc Oxide | | 2.5 | 2.5 | 2.5 | 2.5 |
| | | Vulcanization Accelerator DPG *8 | | 0.6 | 0.6 | 0.6 | 0.6 |
| | | Vulcanization Accelerator MBTS *9 | | 1.0 | 1.0 | 1.0 | 1.0 |
| | | Vulcanization Accelerator TBBD *10 | | 0.6 | 0.6 | 0.6 | 0.6 |
| | | Sulfur | | 1.5 | 1.5 | 1.5 | 1.5 |
| Evaluation | | | tanδ | 100 | 103 | 108 | 110 |
| | | | Abrasion Resistance | 100 | 95 | 102 | 95 |

Table 8

| | | | | Comparative Example | | |
|---|---|---|---|---|---|---|
| | | | | 5 | 6 | 7 |
| Formulation (part by mass) | First State of Kneading | Copolymer*1 | kind | 25 | 26 | 27 |
| | | | amount | 100 | 100 | 100 |
| | | Carbon Black N220 *2 | | 10.0 | 10.0 | 10.0 |
| | | Silica *3 | | 50.0 | 50.0 | 50.0 |
| | | Silane Coupling Agent *4 | | 5.0 | 5.0 | 5.0 |
| | | Aromatic Oil | | 30.0 | 30.0 | 30.0 |
| | | Stearic Acid | | 2.0 | 2.0 | 2.0 |
| | | Antiaging Agent 6PPD *6 | | 1.0 | 1.0 | 1.0 |
| | Final Stage of Kneading | Thiourea *5 | | 1.2 | 1.2 | 1.2 |
| | | Antiaging Agent TMDQ *7 | | 1.0 | 1.0 | 1.0 |
| | | Zinc Oxide | | 2.5 | 2.5 | 2.5 |
| | | Vulcanization Accelerator DPG *8 | | 0.6 | 0.6 | 0.6 |
| | | Vulcanization Accelerator MBTS *9 | | 1.0 | 1.0 | 1.0 |
| | | Vulcanization Accelerator TBBD *10 | | 0.6 | 0.6 | 0.6 |
| | | Sulfur | | 1.5 | 1.5 | 1.5 |
| Evaluation | | | tanδ | 125 | 130 | 134 |
| | | | Abrasion Resistance | 98 | 94 | 89 |

[Notes]

*1: Styrene-butadiene copolymer produced through polymerization based on Production Examples 1 to 20 and Comparative Production Examples 1 to 7.

*2: Trade name "#80" manufactured by Asahi Carbon Co., Ltd.

*3: Nipsil AQ manufactured by Tosoh Silica Corporation, BET surface area 205 m²/g

*4: Bis(3-triethoxysilylpropyl) disulfide (mean sulfur chain length: 2.35), silane coupling agent, trade name "Si75" (registered trademark) manufactured by Evonik Industries.

*5: Thiourea, trade name "Thiourea" manufactured by Sakai Chemical Industry Co., Ltd.

*6: N-(1,3-dimethylbutyl)-N'-phenyl-p-phenylenediamine, trade name "Nocrac 6C" manufactured by Ouchi Sinko Chemical Industrial Co., Ltd.

*7: 2,2,4-Trimethyl-1,2-dihydroquinoline polymer, trade name "Nocrac 224" manufactured by Ouchi Sinko Chemical Industrial Co., Ltd.

*8: 1,3-Diphenylguanidine, trade name "Sanceler D" manufactured by Sanshin Chemical Industry Co., Ltd.

*9: Di-2-benzothiazolyl disulfide, trade name "Sanceler DM" manufactured by Sanshin Chemical Industry Co., Ltd.

*10: N-tert-butyl-2-benzothiazolyl sulfenamide, trade name "Sanceler NS" manufactured by Sanshin Chemical Industry Co., Ltd.

As obvious from Tables 4 to 8, the rubber compositions of Examples 1 to 20 all have a low tanδ index and have improved abrasion resistance as compared with the rubber compositions of Comparative Examples 1 to 7.

Industrial Applicability

The production method for a rubber composition of this embodiment can further improve the activity of the coupling function of a silane coupling agent and can produce a rubber composition excellent in low-heat-generation property and abrasion resistance, and is therefore favorably used as a production method for members of various types of pneumatic tires, especially for tread members of pneumatic radial tires for passenger cars, small-size trucks, minivans, pickup trucks and large-size vehicles.

**Claims**

1. A method for producing a rubber composition containing a rubber component (A) which contains a copolymer of a conjugated diene compound and an aromatic vinyl compound, in which the conjugated diene compound amount in the copolymer is 50% by mass or more and 73% by mass or less and the molecular weight at the peak top of the molecular weight distribution of the polystyrene-equivalent number-average molecular weight of the copolymer as measured through gel permeation chromatography is 100,000 or more and 600,000 or less, a filler containing an inorganic filler (B), a silane coupling agent (C) and at least one accelerator (D) selected from the group consisting of guanidines, sulfenamides, thiazoles, thiurams, thioureas, dithiocarbamates and xanthates, wherein the rubber composition is kneaded in plural stages, and in the first stage (X) of kneading, the rubber component (A), all or a part of the inorganic filler (B), all or a part of the silane coupling agent (C) and the accelerator (D) are added and kneaded.

2. The method for producing a rubber composition according to claim 1, wherein the conjugated diene compound amount in the copolymer is 50% by mass or more and 70% by mass or less.

3. The method for producing a rubber composition according to claim 1, wherein the conjugated diene compound amount in the copolymer is 50% by mass or more and 65% by mass or less.

4. The method for producing a rubber composition according to any one of claims 1 to 3, wherein the molecular weight at the peak top of the molecular weight distribution of the polystyrene-equivalent number-average molecular weight of the copolymer is 150,000 or more and 450,000 or less.

5. The method for producing a rubber composition according to any one of claims 1 to 3, wherein the molecular weight at the peak top of the molecular weight distribution of the polystyrene-equivalent number-average molecular weight of the copolymer is 260,000 or more and 350,000 or less.

6. The method for producing a rubber composition according to any one of claims 1 to 5, wherein, in the first stage of kneading, after the rubber component (A), all or a part of the inorganic filler (B) and all or a part of the silane coupling agent (C) have been kneaded, the accelerator (D) is added and further kneaded.

7. The method for producing a rubber composition according to any one of claims 1 to 6, wherein:

the rubber composition contains an organic acid, and
the molar amount X of the organic acid in the rubber composition in the first stage satisfies a relation of the following formula [1] relative to the molar amount Y of the accelerator (D):

$$0 \le X \le 1.5 \times Y \qquad\qquad [1].$$

8. The method for producing a rubber composition according to claim 7, wherein the organic acid in the rubber composition is added in and after the second stage of kneading.

9. The method for producing a rubber composition according to any one of claims 1 to 8, wherein the maximum temperature of the rubber composition in the first stage is 120°C or higher and 190°C or lower.

10. The method for producing a rubber composition according to any one of claims 1 to 9, wherein the silane coupling agent (C) is one or more kinds of compounds selected from the group consisting of compounds represented by the following formulae (I) to (II):

$$(R^1O)_{3-p}(R^2)_p Si\text{-}R^3\text{-}S_a\text{-}R^3\text{-}Si(OR^1)_{3-r}(R^2)_r \cdots \qquad (I)$$

wherein $R^1$ may be the same or different, and each represents a linear, cyclic or branched alkyl group having 1 to 8 carbon atoms or a linear or branched alkoxyalkyl group having 2 to 8 carbon atoms, $R^2$ may be the same or different, and each represents a linear, cyclic or branched alkyl group having 1 to 8 carbon atoms, $R^3$ may be the same or different, and each represents a linear or branched alkylene group having 1 to 8 carbon atoms, a is 2 to 6 as a mean value, p and r may be the same or different and each is 0 to 3 as a mean value, with the proviso that both p and r are not 3;

$$(R^4O)_{3-s}(R^5)_s Si\text{-}R^6\text{-}S_k\text{-}R^7\text{-}S_k\text{-}R^6\text{-}Si(OR^4)_{3-t}(R^5)_t \cdots \qquad (II)$$

wherein $R^4$ may be the same or different, and each represents a linear, cyclic or branched alkyl group having 1 to 8 carbon atoms or a linear or branched alkoxyalkyl group having 2 to 8 carbon atoms, $R^5$ may be the same or different, and each represents a linear, cyclic or branched alkyl group having 1 to 8 carbon atoms, $R^6$ may be the same or different, and each represents a linear or branched alkylene group having 1 to 8 carbon atoms, $R^7$ represents any divalent group of a general formula (-S-$R^8$-S-), (-$R^9$-$S_{m1}$-$R^{10}$-) or (-$R^{11}$-$S_{m2}$-$R^{12}$-$S_{m3}$-$R^{13}$-) (where $R^8$ to $R^{13}$ may be the same or different and each represents a divalent aliphatic or alicyclic hydrocarbon group having 1 to 20 carbon atoms, a divalent aromatic group or a divalent organic group containing any other hetero element than sulfur and oxygen, m1, m2 and m3 may be the same or different and each is 1 or more and less than 4 as a mean value), k may be the same or different and each is 1 to 6 as a mean value, s and t may be the same or different and each is 0 to 3 as a mean value, with the proviso that both s and t are not 3.

11. The method for producing a rubber composition according to claim 10, wherein the silane coupling agent (C) is a compound represented by the general formula (I).

12. The method for producing a rubber composition according to any one of claims 1 to 11, wherein the inorganic filler (B) is silica.

13. The method for producing a rubber composition according to any one of claims 1 to 12, wherein the guanidine is at least one compound selected from the group consisting of 1,3-diphenylguanidine, 1,3-di-o-tolylguanidine and 1-o-tolyl biguanide.

14. The method for producing a rubber composition according to any one of claims 1 to 13, wherein the thiourea is at least one compound selected from the group consisting of N,N'-diethylthiourea, trimethylthiourea, N,N'-diphenylthiourea and N,N'-dimethylthiourea.

15. A rubber composition produced according to the production method of any one of claims 1 to 14.

## INTERNATIONAL SEARCH REPORT

| | International application No. |
|---|---|
| | PCT/JP2015/084550 |

**A. CLASSIFICATION OF SUBJECT MATTER**
$C08J3/20$(2006.01)i, $C08K3/00$(2006.01)i, $C08K3/36$(2006.01)i, $C08K5/09$ (2006.01)i, $C08K5/31$(2006.01)i, $C08K5/36$(2006.01)i, $C08K5/405$(2006.01)i, $C08K5/54$(2006.01)i, $C08K5/548$(2006.01)i, $C08L9/06$(2006.01)i
According to International Patent Classification (IPC) or to both national classification and IPC

**B. FIELDS SEARCHED**

Minimum documentation searched (classification system followed by classification symbols)
$C08J3/20$, $C08K3/00-13/08$, $C08L1/00-101/14$

Documentation searched other than minimum documentation to the extent that such documents are included in the fields searched
Jitsuyo Shinan Koho          1922-1996   Jitsuyo Shinan Toroku Koho   1996-2016
Kokai Jitsuyo Shinan Koho    1971-2016   Toroku Jitsuyo Shinan Koho   1994-2016

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2012/043853 A1 (Bridgestone Corp.), 05 April 2012 (05.04.2012), claims; examples & US 2013/0261242 A1 claims; examples & EP 2623546 A1          & CN 103189424 A & KR 10-2013-0099084 A   & RU 2013114467 A & JP 2015-178631 A | 1-15 |
| Y | WO 2014/192635 A1 (Sumitomo Rubber Industries, Ltd.), 04 December 2014 (04.12.2014), claims (claim 5); paragraphs [0007], [0062], [0064], [0068], [0069]; examples (Family: none) | 1-15 |

| ☒ | Further documents are listed in the continuation of Box C. | ☐ | See patent family annex. |
|---|---|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 04 March 2016 (04.03.16) | 15 March 2016 (15.03.16) |

| Name and mailing address of the ISA/ Japan Patent Office 3-4-3,Kasumigaseki,Chiyoda-ku, Tokyo 100-8915,Japan | Authorized officer<br><br>Telephone No. |
|---|---|

Form PCT/ISA/210 (second sheet) (January 2015)

## INTERNATIONAL SEARCH REPORT

International application No.

PCT/JP2015/084550

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2013-139504 A  (Nippon Zeon Co., Ltd.), 18 July 2013 (18.07.2013), claims; paragraphs [0005], [0018], [0019], [0027], [0071]; examples (Family: none) | 1-15 |
| Y | JP 2001-49041 A  (Nippon Zeon Co., Ltd.), 20 February 2001 (20.02.2001), claims; paragraphs [0007], [0014]; examples & EP 1236747 A1 claims; examples; paragraphs [0007], [0020] & US 6521733 B1         & WO 2001/010919 A1 & DE 60023738 D | 1-15 |
| A | JP 2012-520926 A  (Styron Europe GmbH), 10 September 2012 (10.09.2012), claims; paragraphs [0007], [0042] & US 2012/0010356 A1    & WO 2010/107555 A1 & EP 2408626 A          & TW 201038674 A & SG 173195 A           & CN 102341251 A & KR 10-2012-0004455 A  & MX 2011009744 A & ES 2406812 T          & RU 2011142189 A | 1-15 |
| A | JP 2005-529981 A  (Exxonmobil Chemical Patents Inc.), 06 October 2005 (06.10.2005), claims; paragraph [0052] & US 2004/0242731 A1    & WO 2003/054032 A1 & EP 1463763 A          & DE 60232020 D & CA 2468636 A          & CN 1602319 A & RU 2004121164 A       & AT 428734 T & AU 2002353093 A       & TW 200307009 A | 1-15 |
| E,A | JP 2016-6153 A  (Bridgestone Corp.), 14 January 2016 (14.01.2016), claim 5 (Family: none) | 1-15 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012043853 A
- JP 1053681 B
- JP 2008291096 A